# EUROPÄISCHE PATENTSCHRIFT

(11) **EP 2 436 258 B1**
(45) Veröffentlichungstag und Bekanntmachung des Hinweises auf die Patenterteilung: **21.05.2014**
(21) Anmeldenummer: 11173735.9
(22) Anmeldetag: 13.07.2011
(51) Int. Cl.: A01D 43/08, A01F 29/22

(54) **Landwirtschaftlicher Selbstfahrhäcksler mit Vorrichtung zur Ermittlung der Schärfe von Schneidmessern**
Agricultural selfpropelled chopper having device for determining the sharpness of cutting blades
Broyeur agricole automoteur avec dispositif de détermination de l'aiguisement de lames de coupe

(30) Priorität: 01.10.2010 DE 102010037915
(43) Veröffentlichungstag der Anmeldung: 04.04.2012
(73) Patentinhaber: CLAAS Selbstfahrende Erntemaschinen GmbH, 33428 Harsewinkel (DE)
(72) Erfinder: Hartmann, Ralf, 49324 Melle (DE)

(56) Entgegenhaltungen:
- EP-A1- 1 386 534
- EP-A1- 2 103 378
- DE-A1-102009 029 675

## Beschreibung

Die Erfindung betrifft eine selbstfahrende Landwirtschaftliche Erntemaschine mit einem Häckselaggregat, aufweisend eine Vorrichtung zur Ermittlung der Schärfe von gegenüber einer Gegenschneide bewegbaren Schneidmessern gemäß dem Oberbegriff des Patentanspruchs 1.

Selbstfahrende Erntemaschinen wie beispielsweise Feldhäcksler weisen eine Häckseleinrichtung auf, um vom Feld geerntetes Gut zu zerkleinern. Dazu rotiert eine mit einer Vielzahl von Schneidmessern bestückte Häckseltrommel gegenüber einer ruhenden Gegenschneide. Erntegut, das in einen von rotierender Messertrommel und Gegenschneide gebildeten Eingriffsbereich gerät, wird durch Zusammenwirkung der an der rotierenden Häckseltrommel befestigten Schneidmesser mit der Gegenschneide zerkleinert, insbesondere gehäckselt.

Die Schneidmesser nutzen sich im Betrieb ab und verlieren somit an Schärfe. Dadurch erhöht sich die für einen Schnittvorgang aufzubringende Schnittkraft und damit die insgesamt beim Häckselprozess aufzubringende Energie. Es ist daher geboten, die Schneidmesser rechtzeitig - d.h. gegebenenfalls auch während eines Ernteeinsatzes - nachzuschleifen, um nicht unnötig hohe Energie für den Häckselprozess aufbringen zu müssen.

Zur Gewährleistung einer für einen energieeffizienten Häckselprozess nötigen Mindestschärfe der Schneidmesser ist es erstrebenswert, die Messerschärfe auf einfache Weise und während des Häckselprozesses überwachen zu können. Ein Nachschleifen der Schneidmesser lässt sich dann rechtzeitig einleiten - beispielsweise manuell durch den Maschinenbediener oder automatisiert -, so dass einerseits eine gewünschte Mindestschärfe nicht unterschritten wird, andererseits die Messer nicht zu häufig geschliffen werden.

Aus der DE 10 2009 029 675 und der EP 1386534 A1 ist es bekannt, beim Häckselprozess durch die auftretenden Schnittkräfte verursachte Vibrationen an der Gegenschneide und/oder der Häckseltrommel mittels eines Vibrationssensors zu erfassen und diese Vibrationen auszuwerten, um daraus Rückschlüsse auf den Schärfezustand der Schneidmesser zu ziehen. Als problematisch daran ist anzusehen, dass die Vibrationen an den Bauteilen unterschiedliche Ursachen haben können, so dass sich daraus nicht unbedingt zuverlässige Schlüsse auf den Schärfezustand der Schneidmesser ziehen lassen.

Es wird als Aufgabe der vorliegenden Erfindung angesehen, eine Vorrichtung der eingangs genannten Art anzugeben, welche durch Anwendung eines anderen Messprinzips die Schärfe der Schneidmesser zuverlässig ermittelt.

Erfindungsgemäß wird diese Aufgabe gelöst durch eine Vorrichtung mit den Merkmalen des Patentanspruchs 1. Die erfindungsgemäße Erntemaschine mit einer Vorrichtung zur Ermittlung der Schärfe von gegenüber einer Gegenschneide bewegbaren Schneidmessern umfasst demnach zumindest einen Sensor zur Erfassung einer von der Schärfe der Schneidmesser abhängigen Größe und eine mit dem Sensor verbundene Auswertungseinrichtung, wobei die Auswertungseinrichtung betreibbar ist, anhand von Signalen des Sensors eine den Schärfezustand der Schneidmesser beschreibende Information zu generieren und zeichnet sich dadurch aus, dass der Sensor geeignet ist, durch den Schneidvorgang erzeugte Wärme zu erfassen.

Der gefundenen Lösung liegt zunächst die für sich gesehen bekannte Beobachtung zugrunde, dass für den Häckselprozess mit stumpfen Schneidmessern ein deutlich erhöhter Energiebedarf gegenüber einem Häckselprozess mit geschärften Schneidmessern besteht. Erfindungsgemäß wurde aus dieser Beobachtung gefolgert, dass die für den Schneidvorgang mit stumpfen Messern erforderliche zusätzliche Energie zu einem hohen Anteil in Wärme umgewandelt wird. Diese Erkenntnis wird durch die erfindungsgemäße Vorrichtung vorteilhaft dazu genutzt, den Schärfezustand der Schneidmesser zu ermitteln, indem ein Sensor durch den Schneidvorgang erzeugte Wärme erfasst und eine mit dem Sensor verbundene Auswertungseinrichtung aus den erhaltenen Sensorsignalen eine Information generiert, die den Schärfezustand der Schneidmesser beschreibt. Die genannte Aufgabe wird so gelöst.

Grundsätzlich ist die genannte Erfindungsidee unterschiedlich umsetzbar. Es kann ausreichen, dass der Sensor nur einen Teil der durch den Schneidvorgang verursachten Wärme erfasst. So könnte der Sensor beispielsweise ausgeführt sein, lediglich eine durch den Schneidvorgang bedingte Erwärmung des Ernteguts zu erfassen.

Alternativ oder ergänzend könnte der Sensor eine Erwärmung eines am Schneidvorgang beteiligten Maschinenelements erfassen. Vorteilhaft generiert in diesem Fall die Auswertungseinrichtung die den Schärfezustand beschreibende Information anhand der betriebsbedingten Veränderung der Temperatur des Maschinenelements. Als am Schneidvorgang beteiligte Maschinenelemente kommen insbesondere die Schneidmesser, die Gegenschneide und/oder ggf. eine Häckseltrommel in Betracht, an welcher die Schneidmesser angebracht sind. Grundsätzlich kann es sich auch um denkbare andere Maschinenelemente (Gehäusewandungen, Lager etc.) handeln, die sich bedingt durch den Schneidvorgang erwärmen und damit eine thermische Schärfeermittlung der Schneidmesser zulassen.

Da sich Veränderungen des Schärfezustands der Schneidmesser in hohem Maße auf die Betriebstemperatur der Schneidmesser selbst auswirken, bietet eine Temperaturerfassung der Schneidmesser eine besonders direkte Möglichkeit der Schärfeermittlung. Es ist denkbar, die Temperatur eines oder mehrerer Schneidmesser beispielsweise durch daran angebrachte Temperatursensoren zu messen. Alternativ ist eine berührungslose Temperaturerfassung mittels eines ruhenden Infrarotsensors denkbar. Es kann sich dabei beispielsweise um eine für sich gesehen bekannte Wärmebildkamera handeln, die anhand der von den Schneidmessern ausgehenden Wärmestrahlung eine Temperaturbestimmung ermöglicht.

Konstruktiv einfach lässt sich daneben eine Temperaturerfassung der Gegenschneide realisieren, da diese während des Schneidbetriebs ruht. Da die Gegenschneide ebenfalls unmittelbar am Schneidvorgang beteiligt ist, lassen sich auch an der Gegenschneide Erwärmungen, die von der Schärfe der Schneidmesser abhängen, vorteilhaft erfassen.

Alternativ oder ergänzend ist es denkbar, dass der Sensor die Temperatur eines im Antriebsstrang des Schneidmessers angeordneten Maschinenelements erfasst. So sind beispielsweise bei einem Feldhäcksler die Schneidmesser zumeist an eine durch einen Riementrieb angetriebene Häckseltrommel montiert. Durch zunehmende aufzubringende Schnittkräfte aufgrund nachlassender Schneidmesserschärfe erhöht sich in einem solchen Riementrieb der Schlupf zwischen Antriebsriemen und Riemenscheiben, so dass Reibungswärme an den entsprechenden Komponenten entsteht. Eine Erfassung derartiger Temperaturerhöhungen kann ebenfalls eine Schärfeerkennung der Schneidmesser ermöglichen.

Gemäß einer vorteilhaften Ausgestaltung der Vorrichtung integriert die Auswertungseinrichtung die Signale des Sensors über die Zeit, um daraus die den Schärfezustand beschreibende Information zu generieren.

Alternativ oder ergänzend zu einer Temperaturmessung von am Schneidvorgang beteiligten Maschinenelementen ist es denkbar, dass zumindest zwei mit der Auswertungseinrichtung verbundene Sensoren vorgesehen sind, von denen ein erster Sensor die Temperatur des Ernteguts vor dem Schneidvorgang und ein zweiter Sensor die Temperatur des Ernteguts nach dem Schneidvorgang erfasst, wobei die Auswertungseinrichtung die den Schärfezustand beschreibende Information anhand eines Vergleichs der Ernteguttemperatur vor und nach dem Schneidvorgang generiert. Der erste Sensor ist dazu zweckmäßigerweise in Bezug auf die Erntegutstromrichtung der aus Schneidmessern und Gegenschneide gebildeten Schneideinrichtung (dem Häckselaggregat) vorgelagert, während der zweite Sensor dieser Schneideinrichtung (dem Häckselaggregat) nachgelagert ist. Die Schärfeermittlung basiert demnach auf einem Vorher-Nachher-Vergleich der Ernteguttemperatur, aus welchem sich unmittelbar die durch den Schneidvorgang verursachte Erwärmung des Ernteguts feststellen und daraus eine Information über die Schärfe der Schneidmesser ableiten lässt. Die Art und Anordnung dabei verwendeter Sensoren ist auf unterschiedliche Weisen denkbar.

Gemäß einer weiteren denkbaren Ausgestaltung des Erfindungsgedankens verfügt die Vorrichtung über zumindest zwei mit der Auswertungseinrichtung verbundene Sensoren, von denen ein erster Sensor die Temperatur des geschnittenen Ernteguts und/oder eines am Schneidvorgang beteiligten Maschinenelements erfasst und von denen ein zweiter Sensor eine Umgebungstemperatur erfasst, wobei die Auswertungseinrichtung die den Schärfezustand beschreibende Information anhand eines Vergleichs der mit den beiden Sensoren erfassten Temperaturen generiert. Bei der vom zweiten Sensor erfassten Umgebungstemperatur handelt es sich um eine vom Schneidvorgang unbeeinflusste Temperatur, beispielsweise um die Temperatur der umgebenden Außenluft eines Feldhäckslers. Die Schärfeermittlung basiert damit auf einem Vergleich dieser Umgebungstemperatur mit der Temperatur des geschnittenen Ernteguts bzw. mit einem am Schneidvorgang beteiligten Maschinenelement.

Allgemein können für die Vorrichtung unterschiedlich arbeitende Sensoren zum Einsatz kommen, die sich für den jeweiligen Zweck eignen. Denkbar ist, dass diese die Temperatur eines Maschinenelements oder des Ernteguts direkt - d.h. am Maschinenelement selbst bzw. das Erntegut selbst - messen. Alternativ kann eine indirekte Temperaturmessung von Vorteil sein, beispielsweise wenn es sich um schwer zugängliche Messobjekte handelt.

Während eine direkte Temperaturmessung eines ruhenden Maschinenelements durch herkömmliche Temperatursensoren (z.B. Widerstandsthermometer) einfach zu realisieren ist, kann für andere Fälle vorgesehen sein, dass zumindest einer der Sensoren zur berührungslosen Temperaturmessung eines Maschinenelements oder des Ernteguts geeignet ist. Eine berührungslose Temperaturmessung kann durch einen Infrarotsensor bzw. eine Infrarotkamera (Wärmebildkamera) erfolgen, welche auf Wärmestrahlung reagieren. Damit ist zumindest eine Messung der Oberflächentemperatur des Messobjekts möglich. Durch berührungslose Temperaturmessung lässt sich bei konstruktiv geringem Aufwand die Temperatur von während des Schneidvorgangs schnell bewegten Objekten wie beispielsweise dem Erntegut, den Schneidmessern, der Häckseltrommel und/oder sonstigen bewegten Maschinenelementen erfassen.

Alternativ zu einer direkten Temperaturerfassung ist es denkbar, die Temperatur beispielsweise des Erntegutes indirekt zu erfassen, wozu der Sensor die Temperatur nicht des Ernteguts selbst, sondern eines Maschinenelements erfasst, das mit dem Erntegut in wärmeaustauschendem Kontakt steht. Ein solches Maschinenelement können im Fall eines Feldhäckslers beispielsweise die Schneidmesser, die Gegenschneide, der Häckselboden, die Einzugsorgane, die Wandung des Förderschachts oder dergleichen sein.

Abhängig von der zum Einsatz kommenden Messmethode können störende Einflussgrößen die beschriebene thermische Messerschärfeermittlung beeinträchtigen. Denkbare Einflussgrößen, welche neben der Schneidschärfe die Temperatur des Ernteguts und/oder die Temperatur von am Schneidvorgang beteiligten Maschinenelementen beeinflussen und daher eine Schärfeermittlung anhand einer Temperaturmessung erschweren, können beispielsweise sein: die Umgebungstemperatur, die Ernteguttemperatur, die Erntegutfeuchte, die Erntegutart, die sonstige Erntegutbeschaffenheit, die Erntegutmenge, die Anzahl und Art der verwendeten Messer, die eingestellte Schnittlänge, die Drehzahl der Häckseltrommel und dergleichen. Gemäß einer vorteilhaften Weiterbildung der Vorrichtung ist die Auswertungseinrichtung betreibbar, bei der Generierung der den Schärfezustand beschreibenden Information das Messergebnis beeinträchtigende Einflussgrößen herauszurechnen. Zweckmäßigerweise ist die Auswertungseinrichtung dazu mit weiteren Sensoren zur Erfassung derartiger Einflussgrößen verbunden und/oder kann auf sonstige Weise derartige Einflussgrößen berücksichtigen.

Vorteilhaft ist die Auswertungseinrichtung weiterhin betreibbar, bei Unterschreiten eines vorgebbaren Mindestschärfezustands der Schneidmesser ein Signal abzugeben, um ein Schärfen der Schneidmesser auszulösen. Ein solches Signal kann an einen Bediener der Vorrichtung abgegeben werden, so dass dieser über das Erreichen eines Mindestschärfezustands der Schneidmesser informiert ist und eine entsprechende Maßnahme, insbesondere das Schleifen der Schneidmesser, durchführen kann. Gemäß einer besonders vorteilhaften Ausführung ist die Auswertungseinrichtung betreibbar, im Fall der Erreichens einer vorgebbaren Mindestschärfe selbsttätig eine Schärfungseinrichtung zu aktivieren, welche die Schneidmesser nachschleift. Vorteilhaft kann vorgesehen sein, dass die Auswertungseinrichtung auch Informationen hinsichtlich der Intensität des durchzuführenden Schleifvorgangs an die Schärfungseinrichtung weitergibt, so dass das Schärfen entsprechend dem Abnutzungsgrad der Schneidmesser dosiert erfolgt.

Zur allgemeinen Informierung des Bedieners ist in weiterhin vorteilhafter Weise die Auswertungseinrichtung mit einer Ausgabeeinrichtung verbunden, um die den Schärfezustand der Schneidmesser beschreibende Information an einen Bediener auszugeben. Die Ausgabeeinrichtung kann beispielsweise optische oder akustische Signale ausgeben, welche den Bediener über die Schärfezustand der Schneidmesser informieren.

Erfindungsgemäß lässt sich die Vorrichtung an einer selbstfahrenden landwirtschaftlichen Erntemaschine mit einem Häckselaggregat wie einem Feldhäcksler verwenden. Eine Verwendung an anderen Erntemaschinen wie beispielsweise Mähdreschern, die ebenfalls eine Häckseleinrichtung aufweisen, ist ebenfalls denkbar.

Die Erfindung wird im Folgenden unter Hinweis auf die beigefügten Figuren anhand unterschiedlicher Ausführungsbeispiele näher erläutert. Daraus ergeben sich auch weitere Einzelheiten und Vorteile der Erfindung. Es zeigen:
- Fig. 1: eine schematische Seitenansicht eines Feldhäckslers, der mit einer Vorrichtung zur Schärfeermittlung gemäß einem ersten Ausführungsbeispiel der Erfindung ausgestattet ist,
- Fig. 2: eine schematische Seitenansicht eines Feldhäckslers, der mit einer Vorrichtung zur Schärfeermittlung gemäß einem zweiten Ausführungsbeispiel der Erfindung ausgestattet ist,
- Fig. 3: eine schematische Seitenansicht eines Feldhäckslers, der mit einer Vorrichtung zur Schärfeermittlung gemäß einem dritten Ausführungsbeispiel der Erfindung ausgestattet ist,
- Fig. 4: eine schematische Seitenansicht eines Feldhäckslers, der mit einer Vorrichtung zur Schärfeermittlung gemäß einem vierten Ausführungsbeispiel der Erfindung ausgestattet ist.

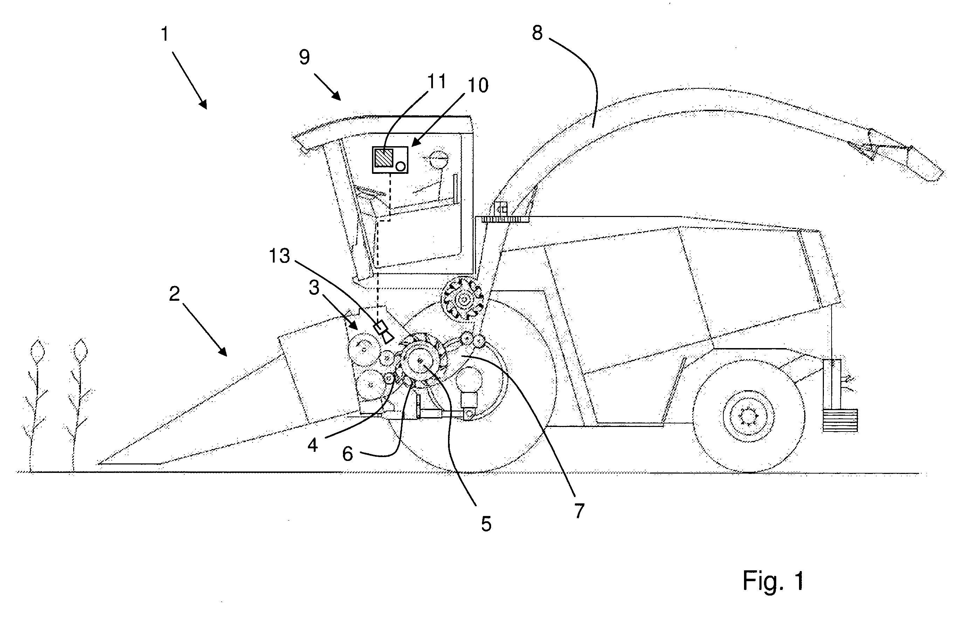

In Fig. 1 ist eine selbstfahrende landwirtschaftliche Erntemaschine in Form eines Feldhäckslers 1 dargestellt. Der Feldhäcksler 1 verfügt über eine nicht näher bezeichnete Vorder- und Hinterachse und eignet sich zur Fahrt über ein Feld, um angedeuteten Pflanzenbestand zu ernten. Im Erntebetrieb schneidet der Feldhäcksler 1 mittels eines Vorsatzgeräts 2 den Pflanzenbestand vom Feld ab und führt diesen einem Einzugsaggregat 3 zu, das unter anderem zwei Vorpresswalzenpaare umfasst, die das geerntete Gut verdichten.

Anschließend wird das geerntete Gut einem Häckselaggregat zugeführt, das im Wesentlichen eine rotierende Häckseltrommel 5 und eine dieser gegenüber ruhende Gegenschneide 4 umfasst. Beim Durchlaufen des Häckselaggregats wird das Erntegut zerkleinert, um anschließend über einen hinter einer Fahrerkabine 9 aufsteigenden Förderschacht 7 und einen sich daran anschließenden Auswurfkrümmer 8 aus dem Feldhäcksler 1 ausgeworfen zu werden.

Die Häckseltrommel 5 ist mit einer Vielzahl von Schneidmessern 6 bestückt und dreht sich im Erntebetrieb gemäß Darstellung in Fig. 1 entgegen dem Uhrzeigersinn, um in Zusammenwirkung mit der ruhenden Gegenschneide 4 das Erntegut zu schneiden, das vom Einzugsaggregat 3 als vorgepresste Erntegutmatte in Richtung der Häckseltrommel 5 gefördert wird.

Da sich die Schneidmesser 6 im Erntebetrieb abnutzen, also stumpf werden, erhöhen sich bei laufendem Erntebetrieb die aufzubringenden Schnittkräfte. Die für den Betrieb der Häckseltrommel 5 erforderliche Antriebsenergie steigt damit. Es besteht daher ein Bedarf, die Schneidmesser 6 abhängig von deren Schärfegrad nachzuschleifen, wozu eine (nicht dargestellte) Schleifeinrichtung vorgesehen ist, welche aktivierbar ist, um die stumpf gewordenen Schneidmesser wieder zu schärfen.

Für einen in der Fahrerkabine 9 sitzenden Bediener des Feldhäckslers 1 ist es wichtig zu wissen, in welchem Schärfezustand sich die Schneidmesser 6 befinden, um diese rechtzeitig nachzuschleifen. Der Feldhäcksler 1 gemäß Fig. 1 verfügt dazu über eine erfindungsgemäße Vorrichtung zur Ermittlung der Schärfe der Schneidmesser 6 gemäß einem ersten Ausführungsbeispiel.

Demnach ist der Feldhäcksler 1 mit einem als Infrarotkamera ausgeführten Sensor 13 ausgestattet, der über eine gestrichelt angedeutete Signalleitung mit einer in der Fahrerkabine 9 angeordneten Auswertungseinrichtung 10 verbunden ist. Der Sensor 13 erfasst von den Schneidmessern 6 ausgehende Wärmestrahlung, so dass die Temperatur der Schneidmesser 6 zumindest anhand deren Oberflächentemperatur bestimmbar ist. Die Signale des Sensors 13 werden laufend an die Auswertungseinrichtung 10 weitergegeben, so dass diese eine Temperaturüberwachung der Schneidmesser 6 vornehmen kann.

Durch die Überwachung der Temperatur der Schneidmesser 6 während des Erntebetriebs ist die Auswertungseinrichtung 10 in der Lage, aus den erhaltenen Sensorsignalen eine den Schärfezustand der Schneidmesser 6 beschreibende Information zu generieren, da sich die Betriebstemperatur der Schneidmesser 6 mit abnehmender Messerschärfe aufgrund zunehmend erzeugter Reibungs- und/oder Verformungswärme erhöht. Vorteilhaft können daneben in der Auswertungseinrichtung 10 empirisch ermittelte Kennwerte hinterlegt sein, aus denen die Auswertungseinrichtung 10 anhand der gemessenen Temperatur den Schärfezustand der Schneidmesser 6 ermitteln kann.

In vorteilhafter Weise ist die Auswertungseinrichtung 10 mit einer eine Anzeigeeinheit aufweisenden Ausgabeeinrichtung 11 verbunden, so dass die von der Auswertungseinrichtung 10 ermittelte Schärfeinformation auch visuell für den Bediener erkennbar ist. Der Bediener kann in diesem Fall selbst entscheiden, ob er aufgrund des angezeigten Schärfezustands bestimmte Maßnahmen wie Messerschleifen einleitet bzw. in welchem Maße oder wie häufig er die Messer schleifen sollte. Gemäß einer vorteilhaften Weiterbildung der Erfindung kann die Auswertungseinrichtung 10 den Schleifvorgang selbsttätig auslösen, indem diese eine damit verbundene (nicht dargestellte) Schleifeinrichtung aktiviert.

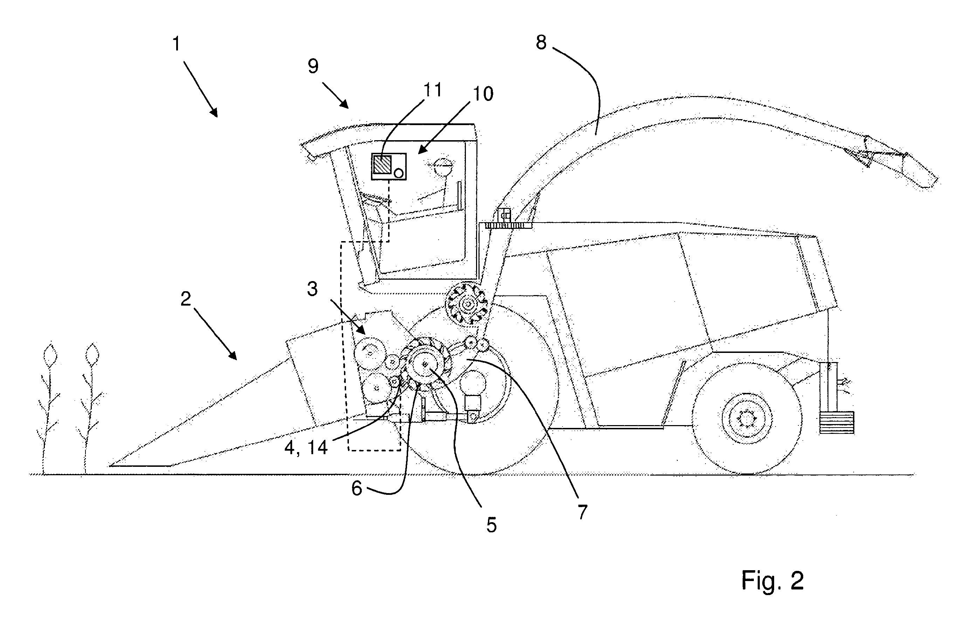

In den Fig. 2 bis 4 ist jeweils ebenfalls ein Feldhäcksler 1 gezeigt, der in der Grundstruktur dem Feldhäcksler 1 gemäß Fig. 1 gleicht. Erläuterungen bezüglich der entsprechend erfüllten Grundfunktionen werden daher zur Vermeidung von Wiederholungen vermieden. Im Folgenden wird nur auf unterscheidende Merkmale gegenüber dem Feldhäcksler gemäß Fig. 1 eingegangen.

Der Feldhäcksler 1 gemäß Fig. 2 ist mit einer Vorrichtung gemäß einem zweiten Ausführungsbeispiel der Erfindung ausgestattet. Hier ist - im Unterschied zum ersten Ausführungsbeispiel - ein Temperatursensor 14 an der Gegenschneide 4 angebracht. Der Sensor 14 ist wieder mit der Auswertungseinrichtung 10 verbunden. Es wird demnach die Temperatur der Gegenschneide 4 gemessen, was konstruktiv günstig ist, da die Gegenschneide 4 während des Betriebs ruht.

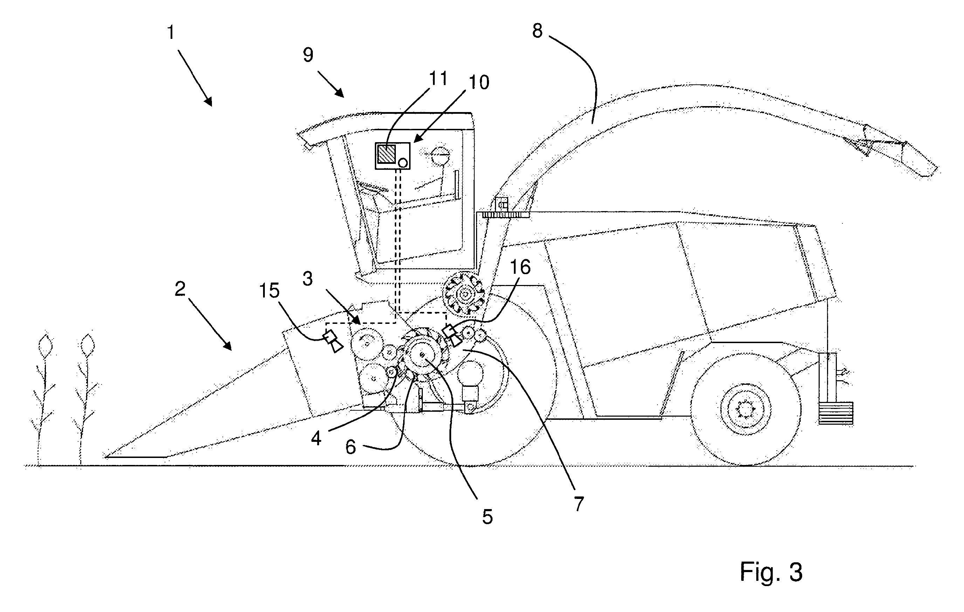

Der Feldhäcksler 1 gemäß Fig. 3 ist mit einer Vorrichtung gemäß einem dritten Ausführungsbeispiel der Erfindung ausgestattet. Zwei als Infrarotkameras ausgeführte Sensoren 15, 16 sind mit der Auswertungseinrichtung 10 verbunden. Der Sensor 15 ist in Bezug auf die Richtung des durch den Feldhäcksler 1 geförderten Erntegutstroms dem Häckselaggregat 4, 5, 6 vorgeordnet, während der Sensor 16 dem Häckselaggregat 4, 5, 6 nachgeordnet ist. Die Sensoren 15, 16 sind jeweils so ausgerichtet, dass sie vom (nicht dargestellten) Erntegut ausgehende Wärmestrahlung erfassen. Der vorgeordnete Sensor 15 eignet sich demnach dazu, die Temperatur des Ernteguts vor dem Schneidvorgang zu erfassen. Der nachgeordnete Sensor 16 eignet sich demnach dazu, die Temperatur des Ernteguts nach dem Schneidvorgang zu erfassen. Anhand eines Temperaturvergleichs zwischen den Messpunkten der Sensoren 15 und 16 ermittelt die Auswertungseinrichtung 10 die Schärfe der Schneidmesser 6. Es sei darauf hingewiesen, dass die Sensoren 15, 16 selbstverständlich auch an von Fig. 1 abweichenden Positionen angeordnet sein können, solange das Funktionsprinzip einer Vorher-Nachher-Temperaturmessung damit erfüllt ist. Weiterhin kann es sich dabei um andere Sensortypen als Infrarotkameras handeln.

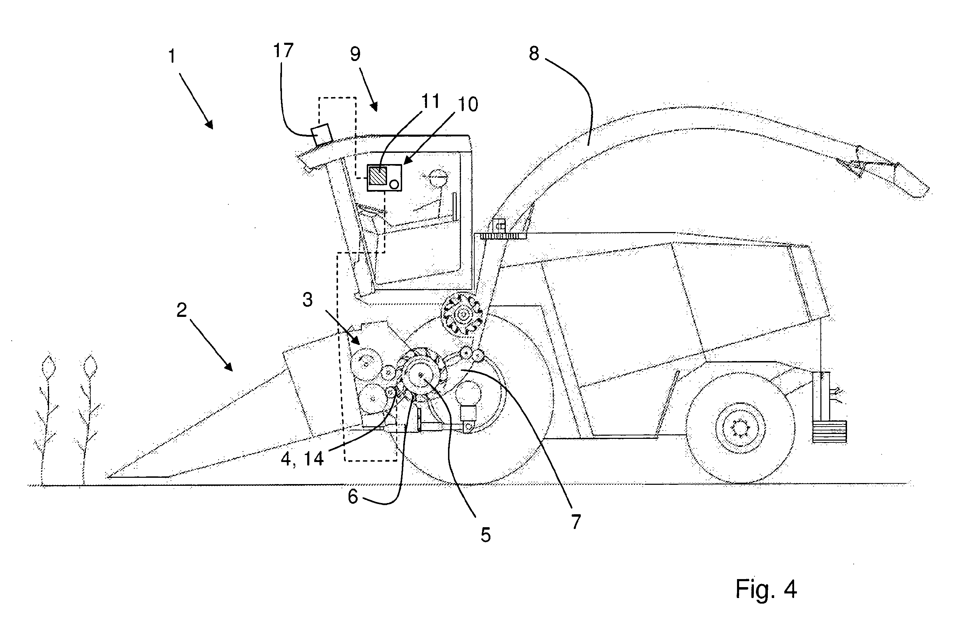

Der Feldhäcksler 1 gemäß Fig. 4 ist mit einer Vorrichtung gemäß einem vierten Ausführungsbeispiel der Erfindung ausgestattet. Wie gemäß zweitem Ausführungsbeispiel verfügt die Vorrichtung über einen Sensor 14 zur Erfassung der Temperatur der Gegenschneide 4. Zusätzlich ist jedoch ein Temperatursensor 17 am Dach der Fahrerkabine 9 angebracht, der ebenfalls mit der Auswertungseinrichtung 10 verbunden ist. Die Auswertungseinrichtung 10 generiert anhand eines Vergleichs der mit dem Sensoren 14 und 17 erfassten Temperaturen eine den Schärfezustand der Schneidmesser 6 beschreibende Information.

Es sei darauf hingewiesen, dass im Rahmen der Erfindung auch beliebige Kombinationen der beschriebenen Messanordnungen denkbar sind.

### Bezugszeichenliste

- 1: Feldhäcksler
- 2: Vorsatzgerät
- 3: Einzugsaggregat
- 4: Gegenschneide
- 5: Häckseltrommel
- 6: Schneidmesser
- 7: Förderschacht
- 8: Überladeeinrichtung
- 9: Fahrerkabine
- 10: Auswertungseinrichtung
- 11: Anzeigeeinheit
- 13: Sensor
- 14: Sensor
- 15: Sensor
- 16: Sensor
- 17: Sensor

## Patentansprüche

1. Selbstfahrende landwirtschaftliche Erntemaschine mit einem Häckselaggregat (4, 5, 6) zum Zerkleinern von Erntegut, aufweisend eine Vorrichtung zur Ermittlung der Schärfe von gegenüber einer Gegenschneide (4) bewegbaren Schneidmessern (6), umfassend zumindest einen Sensor (13 - 17) zur Erfassung einer von der Schärfe der Schneidmesser (6) abhängigen Größe und eine mit dem Sensor (13 - 17) verbundene Auswertungseinrichtung (10), wobei die Auswertungseinrichtung (10) betreibbar ist, anhand von Signalen des Sensors (13 - 17) eine den Schärfezustand der Schneidmesser (6) beschreibende Information zu generierten,
**dadurch gekennzeichnet, dass** der Sensor (13-17) geeignet ist, durch den Schneidvorgang erzeugte Wärme zu erfassen.

2. Erntemaschine nach Anspruch 1, **dadurch gekennzeichnet, dass** der Sensor (13, 14) die Temperatur eines am Schneidvorgang beteiligten Maschinenelements (4, 5, 6) erfasst, wobei die Auswertungseinrichtung (10) die den Schärfezustand beschreibende Information anhand der betriebsbedingten Veränderung der Temperatur des Maschinenelements (4, 5, 6) generiert.

3. Erntemaschine nach Anspruch 2, **dadurch gekennzeichnet, dass** es sich bei dem Maschinenelement um zumindest eines der Schneidmesser (6) handelt.

4. Erntemaschine nach Anspruch 2 oder 3, **dadurch gekennzeichnet, dass** es sich bei dem Maschinenelement um die Gegenschneide (4) handelt.

5. Erntemaschine nach einem der Ansprüche 2 bis 4, **dadurch gekennzeichnet, dass** das Maschinenelement im Antriebsstrang des Schneidmessers (6) angeordnet ist.

6. Erntemaschine nach einem der vorherigen Ansprüche, **dadurch gekennzeichnet, dass** die Auswertungseinrichtung (10) die Signale des Sensors (13 - 17) zeitlich integriert, um daraus die den Schärfezustand beschreibende Information zu generieren.

7. Erntemaschine nach einem der vorherigen Ansprüche, **dadurch gekennzeichnet, dass** zumindest zwei mit der Auswertungseinrichtung (10) verbundene Sensoren (15, 16) vorgesehen sind, von denen ein erster Sensor (15) die Temperatur des Ernteguts vor dem Schneidvorgang und ein zweiter Sensor (16) die Temperatur des Ernteguts nach dem Schneidvorgang erfasst, wobei die Auswertungseinrichtung (10) die den Schärfezustand beschreibende Information anhand eines Vergleichs der Ernteguttemperatur vor und nach dem Schneidvorgang generiert.

8. Erntemaschine nach einem der vorherigen Ansprüche, **dadurch gekennzeichnet, dass** zumindest zwei mit der Auswertungseinrichtung (10) verbundene Sensoren (13 - 17) vorgesehen sind, von denen ein erster Sensor (13 - 16) die Temperatur des geschnittenen Ernteguts und/oder eines am Schneidvorgang beteiligten Maschinenelements (4, 5, 6) erfasst und von denen ein zweiter Sensor (17) eine Umgebungstemperatur erfasst, wobei die Auswertungseinrichtung (10) die den Schärfezustand beschreibende Information anhand eines Vergleichs der mit den beiden Sensoren (13 - 17) erfassten Temperaturen generiert.

9. Erntemaschine nach einem der vorherigen Ansprüche, **dadurch gekennzeichnet, dass** zumindest einer der Sensoren (13 - 17) zur berührungslosen Temperaturmessung eines Maschinenelements (5, 6) oder des Ernteguts geeignet ist.

10. Erntemaschine nach einem der vorherigen Ansprüche, **dadurch gekennzeichnet, dass** zur Erfassung der Temperatur des Ernteguts ein Sensor (13, 14) dient, welcher die Temperatur eines Maschinenelements (4, 5, 6) erfasst, das mit dem Erntegut in wärmeaustauschendem Kontakt steht.

11. Erntemaschine nach einem der vorherigen Ansprüche, **dadurch gekennzeichnet, dass** die Auswertungseinrichtung (10) betreibbar ist, bei der Generierung der den Schärfezustand beschreibenden Information das Messergebnis beeinträchtigende Einflussgrößen herauszurechnen.

12. Erntemaschine nach einem der vorherigen Ansprüche, **dadurch gekennzeichnet, dass** die Auswertungseinrichtung (10) betreibbar ist, bei Unterschreiten eines vorgebbaren Mindestschärfezustands der Schneidmesser (6) ein Signal abzugeben, um ein Schärfen der Schneidmesser (6) auszulösen.

13. Erntemaschine nach einem der vorherigen Ansprüche, **dadurch gekennzeichnet, dass** die Auswertungseinrichtung (10) mit einer Ausgabeeinrichtung (11) verbunden ist, um die den Schärfezustand der Schneidmesser (6) beschreibende Information an einen Bediener auszugeben.

## Claims

1. A self-propelled agricultural harvester comprising a chopping unit (4, 5, 6) for cutting up crop material having a device for determining the sharpness of cutting blades (6) moveable relative to a counterpart cutter (4), including at least one sensor (13 - 17) for detecting a parameter dependent on the sharpness of the cutting blades (6) and an evaluation device (10) connected to the sensor (13 - 17), wherein the evaluation device (10) is operable to generate on the basis of signals from the sensor (13 - 17) an item of information describing the sharpness condition of the cutting blades (6),
**characterised in that** the sensor (13 - 17) is suitable for detecting heat generated by the cutting operation.

2. A harvester according to claim 1 **characterised in that** the sensor (13, 14) detects the temperature of a machine component (4, 5, 6) involved in the cutting operation, wherein the evaluation device (10) generates the item of information describing the sharpness condition on the basis of the operationally-governed change in the temperature of the machine component (4, 5, 6).

3. A harvester according to claim 2 **characterised in that** the machine component is at least one of the cutting blades (6).

4. A harvester according to claim 2 or claim 3 **characterised in that** the machine component is the counterpart cutter (4).

5. A harvester according to one of claims 2 to 4 **characterised in that** the machine component is arranged in the drive train of the cutting blade (6).

6. A harvester according to one of the preceding claims **characterised in that** the evaluation device (10) integrates the signals of the sensor (13 - 17) over time to generate therefrom the item of information describing the sharpness condition.

7. A harvester according to one of the preceding claims **characterised in that** there are provided at least two sensors (15, 16) which are connected to the evaluation device (10) and of which a first sensor (15) detects the temperature of the crop material before the cutting operation and a second sensor (16) detects the temperature of the crop material after the cutting operation, wherein the evaluation device (10) generates the item of information describing the sharpness condition on the basis of a comparison of the crop material temperature before and after the cutting operation.

8. A harvester according to one of the preceding claims **characterised in that** there are provided at least two sensors (13 - 17) which are connected to the evaluation device (10) and of which a first sensor (13 - 16) detects the temperature of the cut crop material and/or a machine component (4, 5, 6) involved in the cutting operation and of which a second sensor (17) detects an ambient temperature, wherein the evaluation device (10) generates the item of information describing the sharpness condition on the basis of a comparison of the temperatures detected with the two sensors (13 - 17).

9. A harvester according to one of the preceding claims **characterised in that** at least one of the sensors (13 - 17) is suitable for contact-less temperature measurement of a machine component (5, 6) or of the crop material.

10. A harvester according to one of the preceding claims **characterised in that** a sensor (13, 14) serves to detect the temperature of the crop material, the sensor detecting the temperature of a machine component (4, 5, 6) which is in heat-exchanging contact with the crop material.

11. A harvester according to one of the preceding claims **characterised in that** the evaluation device (10) is operable to remove by calculation influencing parameters which adversely affect the measurement result in generation of the item of information describing the sharpness condition.

12. A harvester according to one of the preceding claims **characterised in that** the evaluation device (10) is operable to deliver a signal for triggering sharpening of the cutting blades (6) when the sharpness condition of the cutting blades (6) falls below a predeterminable minimum sharpness condition.

13. A harvester according to one of the preceding claims **characterised in that** the evaluation device (10) is connected to an output device (11) to output the item of information describing the sharpness condition of the cutting blades (6) to an operator.

## Revendications

1. Machine agricole de récolte automotrice pourvue d'un groupe de hachage (4, 5, 6) servant à broyer un produit de récolte, comportant un dispositif permettant de déterminer l'affûtage de couteaux (6) mobiles par rapport à un contre-couteau (4), lequel comprend au moins un capteur (13 - 17) pour détecter une grandeur dépendante de l'affûtage des couteaux (6) et un dispositif d'évaluation (10) relié au capteur (13 - 17), lequel dispositif d'évaluation (10) est conçu pour générer une information décrivant l'état d'affûtage des couteaux (6) à partir de signaux du capteur (13 - 17), **caractérisée en ce que** le capteur (13 - 17) est apte à détecter la chaleur produite par l'opération de coupe.

2. Machine de récolte selon la revendication 1, **caractérisée en ce que** le capteur (13, 14) détecte la température d'un élément de machine (4, 5, 6) participant à l'opération de coupe, le dispositif d'évaluation (10) qui génère l'information décrivant l'état d'affûtage à partir de la modification de température liée au fonctionnement de l'élément de machine (4, 5, 6).

3. Machine de récolte selon la revendication 2, **caractérisée en ce que** l'élément de machine est au moins un des couteaux (6).

4. Machine de récolte selon la revendication 2 ou 3, **caractérisée en ce que** l'élément de machine est le contre-couteau (4).

5. Machine de récolte selon l'une des revendications 2 à 4, **caractérisée en ce que** l'élément de machine est disposé dans la chaîne cinématique du couteau (6).

6. Machine de récolte selon l'une des revendications précédentes, 1 **caractérisée en ce que** le dispositif d'évaluation (10) procède à une intégration temporelle des signaux du capteur (13 - 17) pour générer sur cette base l'information décrivant l'état d'affûtage.

7. Machine de récolte selon l'une des revendications précédentes, **caractérisée en ce qu'**au moins deux capteurs (15, 16) reliés au dispositif d'évaluation (10) sont prévus, dont un premier capteur (15) détecte la température du produit de récolte avant l'opération de coupe et un deuxième capteur (16) la température du produit de récolte après l'opération de coupe, le dispositif d'évaluation (10) qui génère l'information décrivant l'état d'affûtage à partir d'une comparaison de la température du produit de récolte avant et après l'opération de coupe.

8. Machine de récolte selon l'une des revendications précédentes, **caractérisée en ce qu'**au moins deux capteurs (13 - 17) reliés au dispositif d'évaluation (10) sont prévus, dont un premier capteur (13 - 16) détecte la température du produit de récolte coupé et/ou d'un élément de machine (4, 5, 6) participant à l'opération de coupe et dont un deuxième capteur (17) détecte une température ambiante, 1 le dispositif d'évaluation (10) qui génère l'information décrivant l'état d'affûtage à partir d'une comparaison des températures détectées avec les deux capteurs (13 - 17).

9. Machine de récolte selon l'une des revendications précédentes, 1 **caractérisée en ce qu'**au moins un des capteurs (13 - 17) est apte à mesurer sans contact la température d'un élément de machine (5, 6) ou du produit de récolte.

10. Machine de récolte selon l'une des revendications précédentes, **caractérisée en ce que** la température du produit de récolte est détectée à l'aide d'un capteur (13, 14) qui détecte la température d'un élément de machine (4, 5, 6) en contact d'échange de chaleur avec le produit de récolte.

11. Machine de récolte selon l'une des revendications précédentes, **caractérisée en ce que** le dispositif d'évaluation (10) est conçu pour, lors de la génération de l'information décrivant l'état d'affûtage, éliminer les grandeurs d'influence qui affectent le résultat de mesure.

12. Machine de récolte selon l'une des revendications précédentes, **caractérisée en ce que** le dispositif d'évaluation (10) est conçu pour, lorsqu'un état d'affûtage minimal prédéterminable des couteaux (6) n'est pas atteint, émettre un signal pour déclencher un affûtage des couteaux (6).

13. Machine de récolte selon l'une des revendications précédentes, 1 **caractérisée en ce que** le dispositif d'évaluation (10) est relié à un dispositif de sortie (11) pour délivrer à un opérateur l'information décrivant l'état d'affûtage des couteaux (6).
